# EUROPEAN PATENT APPLICATION

(11) **EP 4 180 772 A1**
(43) Date of publication of application: **17.05.2023**
(21) Application number: 22207124.3
(22) Date of filing: 14.11.2022
(51) Int. Cl.: G01C 23/00, G06V 30/14, G08G 5/00, G08G 5/06, G01C 21/00, G06F 16/11, G06V 30/00, G06F 16/54

(54) **ELECTRONIC CHART APPLICATION WITH ENHANCED ELEMENT SEARCHING AND HIGHLIGHTING USING GENERIC THIRD-PARTY DATA**

(30) Priority: 12.11.2021 US 202117525690; 12.11.2021 US 202163278576 P
(71) Applicant: Rockwell Collins, Inc., Cedar Rapids, IA 52498 (US)
(72) Inventor: WONG, Jason L., Marion, IA 52303 (US); HENRY, Jeff M., Cedar Rapids, IA (US); PETERS, Kyle R., Ely, IA (US); MILLER, Todd E., Marion, IA (US); KOVACH, Reed A., Cedar Rapids, IA 52405 (US); NANDAKUMAR, Srinath A., San Ramon, CA 94582 (US)
(74) Representative: Dehns

(57) **Abstract**

A system and method for flight chart element searching is disclosed. A host computing device (302) is configured to convert PDF flight chart files to SVG flight chart files defined in XML, detect flight chart elements in the SVG flight chart files, convert the SVG flight chart files to flight charts defined in aircraft display hardware directives, and combine the flight charts and flight chart element data into a flight chart database. An aircraft computing device (314) is configured to display a flight chart and a GUI using an aircraft display (322), and highlight a flight chart element in response to a user searching for and selecting a flight chart element name.

## Description

### BACKGROUND

Digital flight charts (i.e., aeronautical charts) are usually provided by third-party vendors in a format such as PDF and must be converted to an appropriate graphical format for use in flight displays. Flight charts can be cluttered with many chart elements, and thus a pilot may have difficulty deciphering the flight charts.

### SUMMARY

A system for flight chart element searching is disclosed in accordance with one or more illustrative embodiments of the present disclosure. In one illustrative embodiment, the system comprises: a host computing device including one or more processers configured to execute program instructions causing the one or more processors to: convert one or more portable document format (PDF) flight chart files to one or more scalable vector graphics (SVG) flight chart files defined in extensible markup language (XML), wherein each of the SVG flight chart file(s) is associated with respective metadata defined in XML; detect one or more flight chart elements in each of the SVG flight chart file(s), wherein each of the flight chart element(s) comprises an element type of a plurality of element types, the plurality of element types comprising at least: an airway symbol, a runway symbol, or a taxiway symbol; convert the SVG flight chart file(s) to one or more flight charts defined in one or more sets of aircraft display hardware directives, wherein each of the flight chart(s) is associated with the respective metadata; and combine the flight chart(s), the respective metadata, and flight chart element data of the detected flight chart element(s) into a flight chart database, wherein the flight chart element data includes at least: a flight chart element name associated with one of the flight chart element(s) of one of the flight chart(s); the element type of the one of the flight chart element(s); an x coordinate of the one of the flight chart element(s); and a y coordinate of the one of the flight chart element(s).

A method for flight chart element searching is disclosed in accordance with one or more illustrative embodiments of the present disclosure. In one illustrative embodiment, the method comprises: using a host computing device, converting one or more portable document format (PDF) flight chart files to one or more scalable vector graphics (SVG) flight chart files defined in extensible markup language (XML), wherein each of the SVG flight chart file(s) is associated with respective metadata defined in XML; detecting one or more flight chart elements in each of the SVG flight chart file(s), wherein each of the flight chart element(s) comprises an element type of a plurality of element types, the plurality of element types comprising at least: an airway symbol, a runway symbol, or a taxiway symbol; converting the SVG flight chart file(s) to one or more flight charts defined in one or more sets of aircraft display hardware directives, wherein each of the flight chart(s) is associated with the respective metadata; and combining the flight chart(s), the respective metadata, and flight chart element data of the detected flight chart element(s) into a flight chart database, wherein the flight chart element data includes at least: a flight chart element name associated with one of the flight chart element(s) of one of the flight chart(s); the element type of the one of the flight chart element(s); an x coordinate of the one of the flight chart element(s); and a y coordinate of the one of the flight chart element(s).

It is to be understood that both the foregoing general description and the following detailed description are exemplary and explanatory only and are not necessarily restrictive of the invention as claimed. The accompanying drawings, which are incorporated in and constitute a part of the specification, illustrate embodiments of the invention and together with the general description, serve to explain the principles of the invention.

### BRIEF DESCRIPTION OF DRAWINGS

The numerous advantages of the disclosure may be better understood by those skilled in the art by reference to the accompanying figures in which:
- FIG. 1: is a conceptual image illustrating an en-route flight chart.
- FIG. 2: is a conceptual image illustrating an airport diagram flight chart.
- FIG.: 3 is a block diagram of a system for flight chart element searching, in accordance with one or more embodiments of the present disclosure.
- FIG. 4: is a conceptual image illustrating an SVG path defined in XML, in accordance with one or more embodiments of the present disclosure.
- FIG. 5: is a conceptual image illustrating the image recognition of a font character, in accordance with one or more embodiments of the present disclosure.
- FIG. 6: is a conceptual image illustrating the detection of an airway symbol, in accordance with one or more embodiments of the present disclosure.
- FIG. 7: is a conceptual image illustrating a flight chart with a highlighted airway symbol, in accordance with one or more embodiments of the present disclosure.
- FIG. 8: is a conceptual image illustrating a flight chart with highlighted obstacle symbols, in accordance with one or more embodiments of the present disclosure.
- FIG. 9: is a table illustrating flight chart element data, in accordance with one or more embodiments of the present disclosure.
- FIG. 10: is a flowchart illustrating a method for flight chart element searching, in accordance with one or more embodiments of the present disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the present disclosure, numerous specific details are set forth in order to provide a more thorough understanding of the inventive concepts. However, it will be apparent to one of ordinary skill in the art having the benefit of the present disclosure that the inventive concepts disclosed herein may be practiced without these specific details. In other instances, well-known features may not be described in detail to avoid unnecessarily complicating the present disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). In addition, use of the "a" or "an" are employed to describe elements and components of embodiments of the present inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination or sub-combination of two or more such features, along with any other features which may not necessarily be expressly described or inherently present in the present disclosure.

Aeronautical charts (flight charts) are used by pilots to navigate aircraft during departing and landing phases (e.g., using airport diagrams and terminal flight charts) and during en-route phases (e.g., using en-route flight charts). Using flight charts and other tools, pilots are able to determine position of the aircraft, safe altitudes for the aircraft, best route to a destination, navigation aids, alternative landing areas in case of an in-flight emergency, and other useful information such as radio frequencies and airspace boundaries. Specific charts are used for each phase of a flight and may vary from a map of a particular airport facility to an overview of the instrument routes covering an entire continent (e.g., global navigation charts).

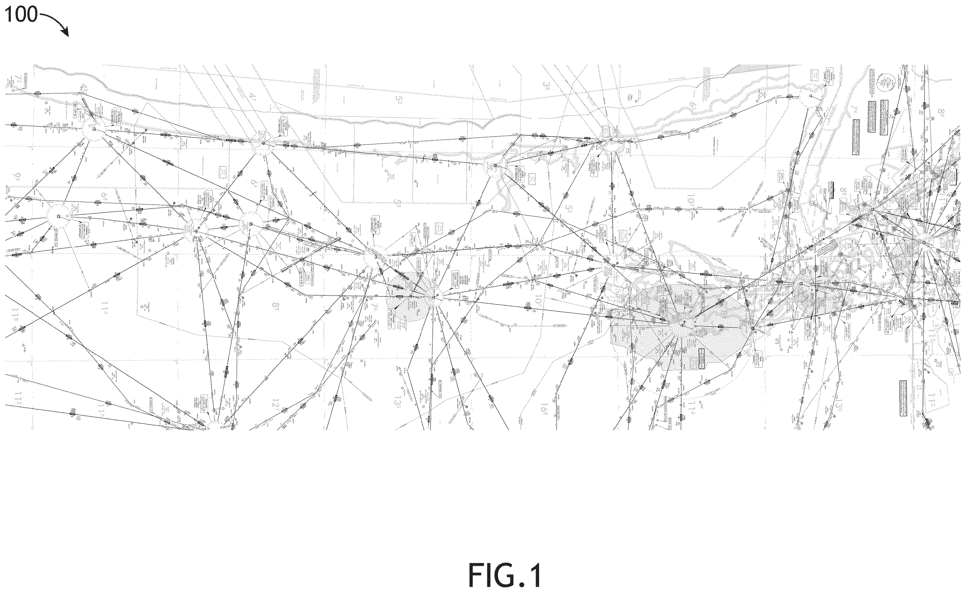

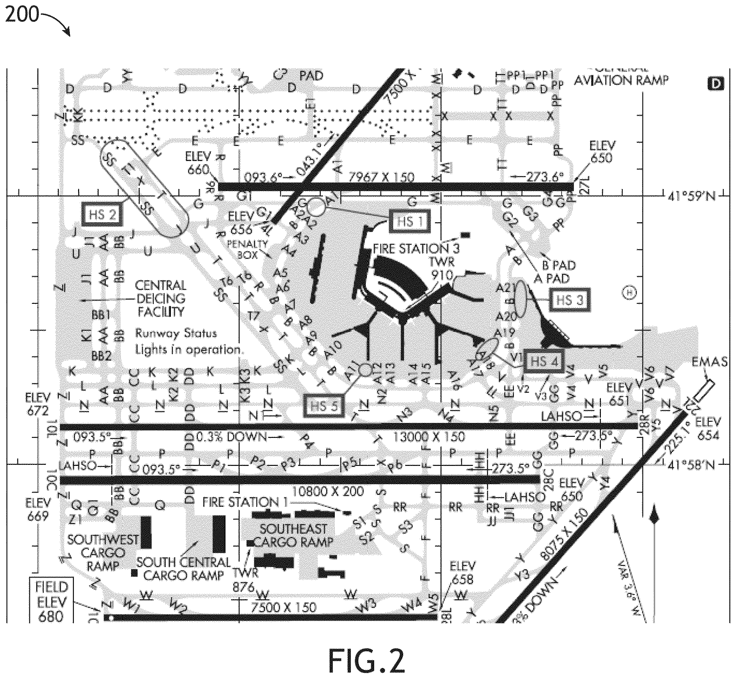

Some flight charts are large and cluttered with information, making them difficult to decipher for a pilot and thus may impede safe and timely navigation. For example, it may be difficult to find specific elements on a chart such as taxiways, runways, and especially airways (e.g., navigational paths). FIG. 1 shows a conventional en-route flight chart 100 that is 60 inches wide and 20 inches tall. Due to the size of the chart and the large number of airways, tracking a specific airway may be difficult for a pilot. This difficulty reduces the usability of en-route charts and makes operating a flight display cumbersome. Similarly, FIG. 2 shows an airport diagram flight chart 200. Finding specific taxiways or runways for larger airports may be difficult due to the large number of chart elements, which may lead to taxiway collisions (since pilots may choose the wrong runway), and reduced turn-around times for flights (since navigation of taxiways may take longer than expected).

The above problems persist since flight charts are conventionally distributed as portable data format (PDF) files by vendors such as the National Geospatial-Intelligence Agency (NGA). The data in the PDF files are not accessible in a way such that pilots can easily find runways, taxiways, and airways. Thus, to solve the problems described above, it is desirable to provide flight charts that are easier to search and read.

Embodiments of the present disclosure are directed to a system for flight chart element searching. A method of flight chart element searching is also disclosed. The present system and method entail processing flight chart PDF files into a loadable mediaset to enable searching and highlighting of of runways, taxiways, airways, and other flight chart elements. The present system and method may employ the Electronic Charts Application Tool Suite (ECATS) developed by Collins Aerospace (Cedar Rapids, IA). The present system converts PDF flight chart files into scalable vector graphics (SVG) flight chart files, detects flight chart elements (i.e., symbols) such as runways, taxiways, airways, and other elements, and outputs the flight charts into a loadable mediaset (e.g., flight chart database). A pilot of an aircraft may then search the flight charts for a specific flight chart element by inputting a name of the flight chart element into a search bar, and the flight chart element may then be highlighted on the displayed flight chart.

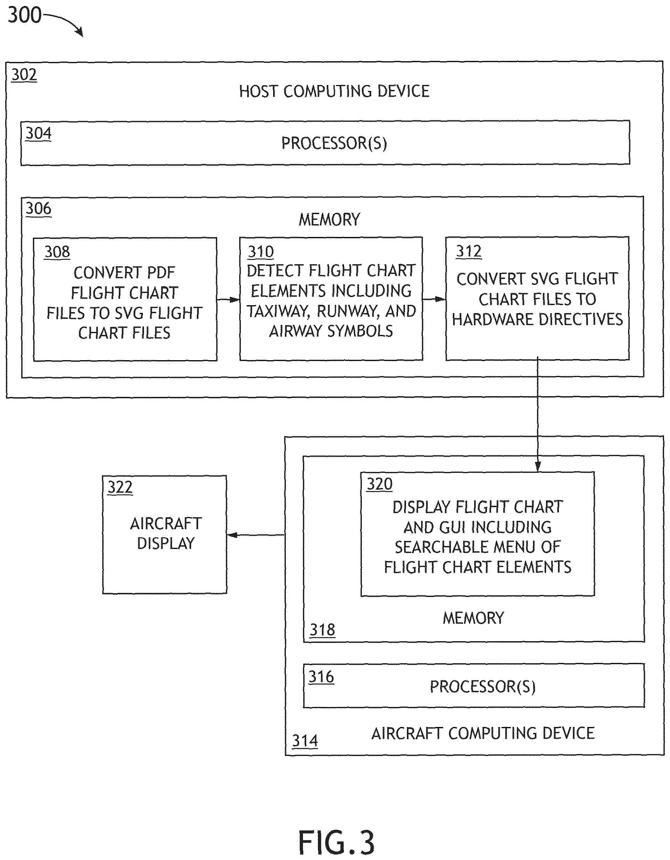

FIG. 3 is a block diagram illustrating a system 300 flight chart element searching, in accordance with one or more embodiments of the present disclosure. The system includes a host computing device 302, an aircraft computing device 314, and an aircraft display 322.

The host computing device 302 and the aircraft computing device 314 may be controllers (e.g., computers), each respectively including one or more processors 304, 316 and a memory 306, 318. For the purposes of the present disclosure, the term "processor" or "processing element" may be broadly defined to encompass any device having one or more processing or logic elements, for example, one or more central processing units (CPUs), one or more graphics processing units (GPUs), one or more micro-processor devices, one or more application specific integrated circuit (ASIC) devices, one or more field programmable gate arrays (FPGAs), or one or more digital signal processors (DSPs), etc. In this sense, the one or more processors 304, 316 may include any device configured to execute algorithms and/or instructions (e.g., program instructions or modules stored in memory), and may be configured to perform the method steps described in the present disclosure. For example, the processors 304 may execute the modules 308, 310, and 312, and the processors 316 may be configured to execute the module 320. The memories 306, 318 may include any storage medium known in the art suitable for storing program instructions executable by the associated processors 304, 316. For example, the memories 306, 318 may include, but are not limited to, a read-only memory (ROM), a random-access memory (RAM), a magnetic or optical memory device (e.g., hard disk), a magnetic tape, a solid-state drive, and the like.

The host computing device 302 may be, for example, a personal computer (PC), a laptop, a smartphone, a tablet, a server, a mainframe, etc. In some embodiments, the host computing device 302 may operate using a Microsoft^{®} Windows^{®} operating system, an Apple^{®} macOS^{®} operating system, a Linux-based operating system, etc. In some embodiments, the host computing device 302 may comprise a plurality of computing devices (e.g., a cloud-based system). It is noted that the host computing device 302 may be a ground-based computing device (e.g., not a part of an aircraft). The aircraft computing device(s) 314 may comprise one or more avionics embedded systems (e.g., an avionics suite), and may include a flight management system (FMS) computing device, a communications computing device, a navigation computing device, a flight display computing device, a flight control computing device, a fuel management computing device, a collision-avoidance computing device, a weather computing device, etc. The aircraft display 322 may be an LCD or CRT monitor, for example, a primary flight display (PFD), or a multifunction display (MFD), and may be configured to present a flight chart (e.g., defined in aircraft display hardware directives) to a user of an aircraft.

One or more PDF flight chart files may be stored on the memory 306 of the host computing device 302. The module 308 may be configured to convert the PDF flight chart file(s) to one or more SVG flight chart files defined in extensible markup language (XML). The SVG flight chart file(s) may be images representing terminal flight charts, en-route flight charts, nautical charts, world aeronautical charts, sectional charts, etc. The images may show topographical features such as terrain elevations, ground features identifiable from altitude (rivers, dams, bridges, buildings, airports, beacons, landmarks, etc.), and information related to airspace classes, ground-based navigation aids, radio frequencies, longitude and latitude, navigation waypoints, navigation routes, etc. The SVG flight chart file(s) may be associated with metadata such as flight chart name (e.g., "Omaha Eppley Airfield"), flight chart type (e.g., terminal, en-route, world aeronautical, etc.), flight chart location, etc.

The modules (e.g., program instructions) 310 and 312 stored on the memory 306 may process the SVG flight chart file(s). The modules 310 and 312 may be submodules of a flight chart processing module. The flight chart processing module may be substantially similar or substantially identical to the Electronic Charts Application Tool Suite developed by Collins Aerospace (Cedar Rapids, IA), and may be configured to convert the PDF flight chart file(s) to the SVG flight chart file(s), process and simplify the SVG flight chart file(s), convert the SVG flight chart(s) file to one or more flight charts defined in aircraft display hardware directives, compress the flight chart(s), and combine the flight chart(s) into a flight chart database.

The module 310 may be configured to detect one or more flight chart elements in each of the SVG flight chart file(s). Each of the flight chart element(s) may comprise an element type such as an airway symbol, a runway symbol, a taxiway symbol, an obstacle symbol etc. The airway symbol may represent an air route or navigational path in the flight chart image. The runway symbol may represent a runway (for take-off and landing of an aircraft) in the flight chart image. The taxiway symbol may represent a taxiway (for taxiing the aircraft between a runway and a terminal) in the flight chart image. The module 310 may be an image recognition module (e.g., comprising one or more image recognition algorithms) configured to recognize patterns in the flight chart image.

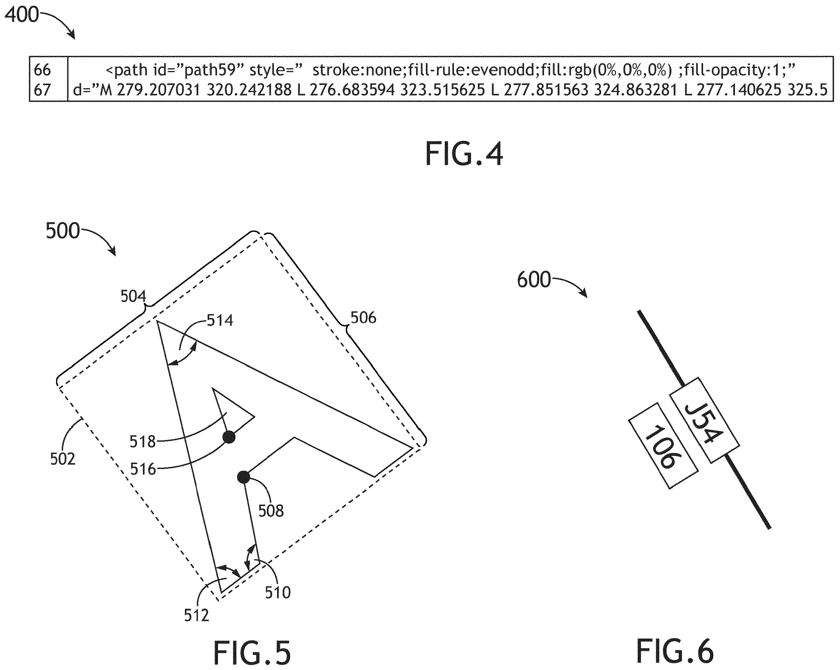

As shown in FIG. 4, the SVG flight chart file(s) may comprise a plurality of SVG paths 400 (XML mark-up instructions that draw the lines, curves, and flight chart elements). Each SVG path 400 may include a set of coordinates (horizontal X coordinates and vertical Y coordinates) corresponding to the location of the respective flight chart element in the flight chart. The module 310 may detect (i.e., identify) specific flight chart elements based on the information encoded in the SVG paths 400 (by detecting patterns).

For example, as shown in FIG. 5, a flight chart element 500 representing a font character 502 (e.g., the letter "A") may be recognized by parsing the respective SVG path 400 using the following criteria: (1) the number of vertices 508, 516 (2) the sequence of angles 510, 512, and 514 at each vertex, (3) the sum of a sequence of angles 510, 512, 514, (4) the detection of a shape 518 inside the flight chart element 500, and (5) the ratio of width 504 to height 506. In another example, to detect an airway symbol 600 as shown in FIG. 6, the module 310 may detect a sequence of font characters inside a rectangular box that overlaps a line. In this way, a variety of flight chart elements may be detected (e.g., landmarks, obstacles, airways, runways, taxiways, etc.).

Referring back to FIG. 3, the module 312 may be configured convert the SVG flight chart file(s) to one or more flight charts defined in one or more sets of aircraft display hardware directives. Each of the aircraft display hardware directives may have a 32 bit form with 8 bits allocated to an opcode (e.g., that specifies a graphic operation to be performed, such as DRAW, MOVE, SETCOLOR) and 24 bits allocated to pixel data and pixel address (e.g., color of pixel(s), location of pixel(s), etc.). The aircraft display hardware directives may be quickly and easily drawn on the aircraft display 322 (after being loaded onto the aircraft computing device 314). The aircraft display hardware directives may decrease loading times and preserve processing and memory resources of the aircraft computing device 314 (since PDF or SVG flight chart files are too large to store on the memory 318 of the aircraft computing device 314, and may require long loading times to display on the aircraft display 322).

Subsequently, the module 312 may be configured to combine the flight chart(s), the metadata, and flight chart element data into a flight chart database. Each of the detected flight chart elements may be associated with respective flight chart element data. The flight chart element data may include: (1) a flight chart element name associated with the respective flight chart element; (2) the element type of the respective flight chart element; (3) an x coordinate of the respective flight chart element; and (4) a y coordinate of the respective flight chart element. The element type may be, for example, an airway symbol, a runway symbol, a taxiway symbol, an obstacle symbol, etc.

The flight chart database (including the metadata and flight chart element data) is then loaded onto the memory 318 of the aircraft computing device(s) 314. A list of flight charts may populate the aircraft display 322, and a user of the aircraft may then highlight and select a flight chart to present on the aircraft display 116.

The flight chart database 110 may be searchable using the respective associated metadata 102 of the flight chart. For example, the user of the aircraft may search for the name of the flight chart or the name of a geographical location corresponding to the flight chart (for example, "Chicago Airport").

The module 320 may be configured to display one of the flight chart(s) selected by the user (using the aircraft display 322). Additionally, a graphical user interface (GUI) may be displayed using the aircraft display 322. The GUI may include a menu configured to present flight chart element names respectively associated with each of the flight chart element(s).

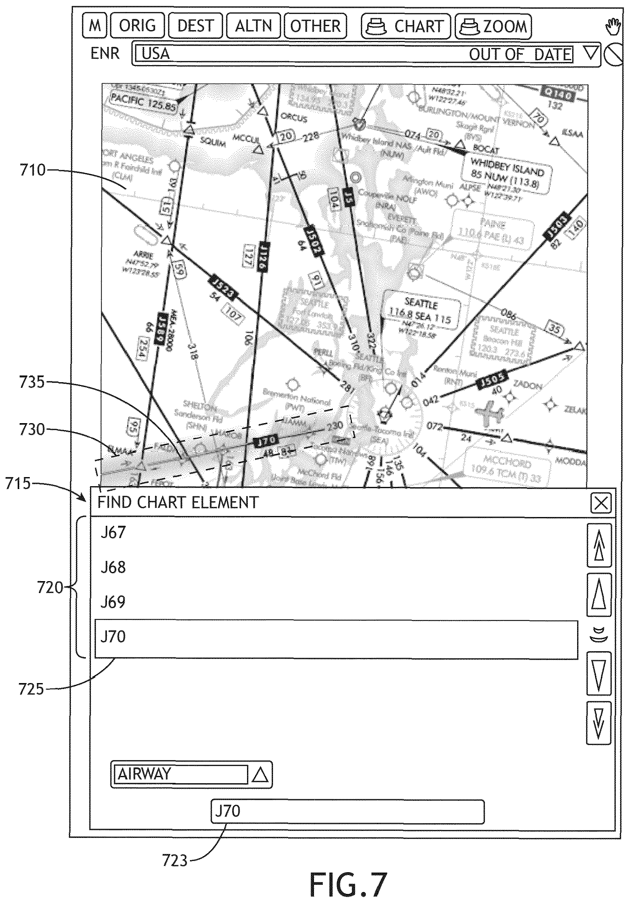

For example, FIG. 7 shows a flight chart 710 and a GUI 715 (both displayed on the aircraft display 322). The GUI 715 may include a menu displaying a plurality of flight chart element names 720. The user may search for a specific flight chart element 735 (e.g., an airway symbol named "J70") using a search bar 723. The user may interface with the search bar 723 using an input device such as a keyboard, touchscreen, a microphone configured to receive a voice input (e.g., to transcribe the voice input into text), etc.

In response to the user searching for a flight chart element name 725 (e.g., "J70") and selecting the flight chart element name 725, the module 320 may highlight the associated flight chart element 735 on the flight chart 710 (using the aircraft display 322). The highlighting may be a color gradient 730 (i.e., a glow effect) applied around the flight chart element 735. For example, the color gradient 730 may gradually transition from transparent to a solid color (e.g., red, blue, yellow, green, orange, etc.). In some embodiments, a first color gradient (e.g., red) may be applied to the highlighted flight chart element 735, and a second color gradient (e.g., blue) may be applied to other flight chart elements that are not selected.

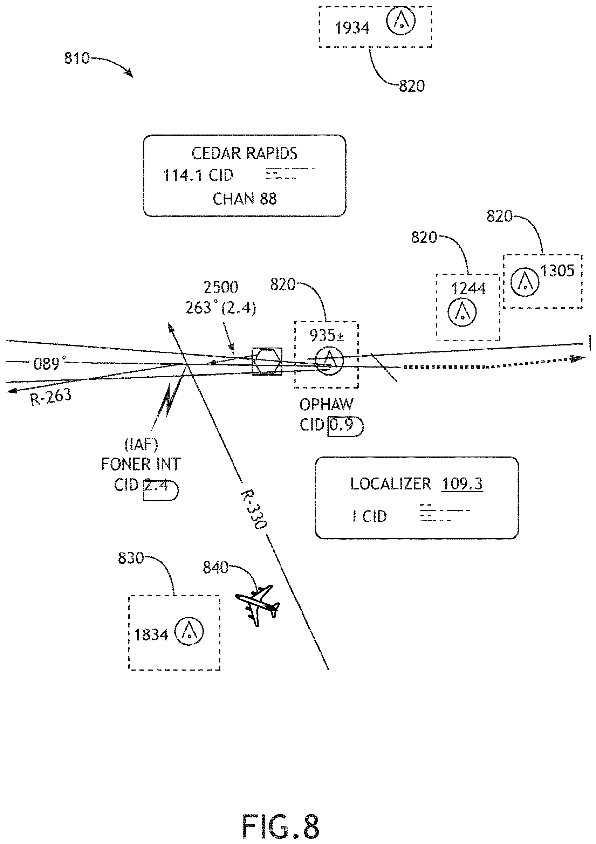

In some embodiments, flight chart elements that comprise obstacle symbols (e.g., warning of dangerous structures or terrain such as tall buildings or mountains) may be highlighted (e.g., when they are dangerously close to the aircraft). For example, as shown in FIG. 8, a flight chart 810 may include a plurality of obstacle symbols 820 and 830. In response to a geographical location of an aircraft (e.g., detected using GPS) represented by the aircraft symbol 840 being within a threshold distance (i.e., radius) to a geographical location of the obstacle represented by the obstacle symbol 830, the obstacle symbol 830 may be highlighted using a color gradient (e.g., red).

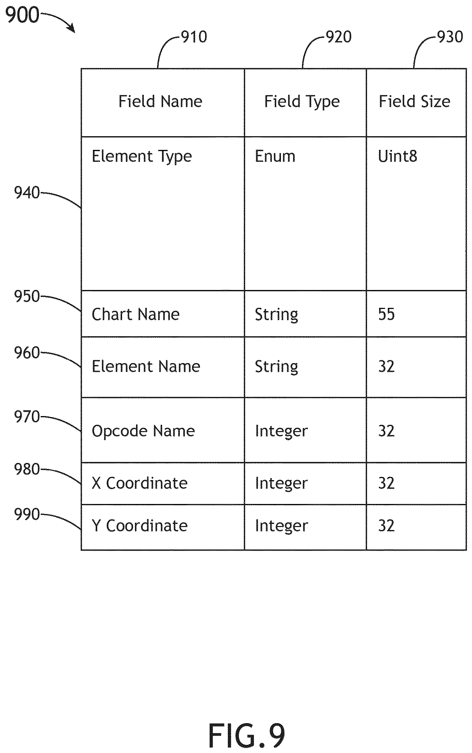

FIG. 9 is a table showing flight chart element data 900, in accordance with one or more embodiments of the present disclosure. The flight chart element data 900 may be extracted from the flight chart database. The columns may include a field name 910, a field data type 920 (e.g., string, integer, enumerated type), and a field size (e.g., 32 bits, 55 bits, etc.). The flight chart element data 900 may include a flight chart element type 940 (e.g., airway symbol, runway symbol, taxiway symbol, obstacle symbol, etc.), flight chart name 950 (e.g., the name of the flight chart that the flight chart element is found), flight chart element name 960 (e.g., searchable by the user using the search bar 723), flight chart element opcode name 970 (the aircraft display hardware directive used to update the flight chart element color and style for highlighting purposes), an X coordinate 980 (horizontal coordinate in the flight chart), and Y coordinate 990 (vertical coordinate in the flight chart).

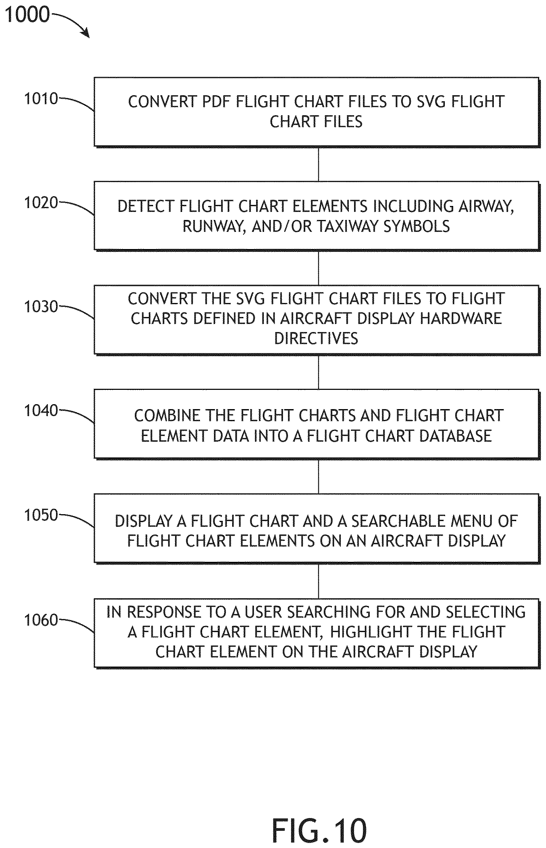

FIG. 10 is a flowchart illustrating a method 1000 for flight chart element searching, in accordance with one or more embodiments of the present disclosure. The method 1000 may be implemented by the system 300 as described with respect to FIG. 3. Steps 1010, 1020, 1030, and 1040 may be performed using a host computing device (e.g., host computing device 302 described with respect to FIG. 3), and steps 1050 and 1060 may be performed using an aircraft computing device (e.g., aircraft computing device 314 described with respect to FIG. 3).

At step 1010, one or more PDF flight chart files may be converted to one or more SVG flight chart files defined in XML. Each of the SVG flight chart file(s) may be associated with respective metadata defined in XML (e.g., flight chart name, flight chart type, etc.).

At step 1020, one or more flight chart elements may be detected in each of the SVG flight chart file(s). Each of the flight chart element(s) may comprise an element type (e.g., an airway symbol, a runway symbol, a taxiway symbol, etc.).

At step 1030, the SVG flight chart file(s) may be converted to one or more flight charts defined in one or more sets of aircraft display hardware directives. Each of the flight chart(s) is associated with the respective metadata.

At step 1040, the flight chart(s), the respective metadata, and flight chart element data of the detected flight chart element(s) may be combined into a flight chart database. The flight chart element data may include: a flight chart element name, a flight chart element type, a flight chart element x coordinate, and a flight chart element y coordinate.

At step 1050, a flight chart and a graphical user interface (GUI) may be displayed using an aircraft display. The aircraft display is configured to display the flight chart using a set of aircraft display hardware directives. The GUI includes a menu configured to present one or more flight chart element names associated with the flight chart element(s). The flight chart element name(s) are configured to be searchable by a user of an aircraft using a search bar.

At step 1060, in response to the user searching for a flight chart element name and selecting the flight chart element name, the associated flight chart element may be highlighted in the flight chart using the aircraft display.

It is believed that the present disclosure and many of its attendant advantages will be understood by the foregoing description, and it will be apparent that various changes may be made in the form, construction and arrangement of the components without departing from the disclosed subject matter or without sacrificing all of its material advantages. The form described is merely explanatory, and it is the intention of the following claims to encompass and include such changes. Furthermore, it is to be understood that the invention is defined by the appended claims.

## Claims

1. A system for flight chart element searching, comprising:
a host computing device (302) including one or more processers (304) configured to execute program instructions causing the one or more processors to:
convert one or more portable document format, PDF, flight chart files to one or more scalable vector graphics, SVG, flight chart files defined in extensible markup language, XML,
wherein each of the SVG flight chart file(s) is associated with respective metadata defined in XML;
detect one or more flight chart elements in each of the SVG flight chart file(s), wherein each of the flight chart element(s) comprises an element type of a plurality of element types, the plurality of element types comprising at least:
an airway symbol, a runway symbol, or a taxiway symbol;
convert the SVG flight chart file(s) to one or more flight charts defined in one or more sets of aircraft display hardware directives, wherein each of the flight chart(s) is associated with the respective metadata; and
combine the flight chart(s), the respective metadata, and flight chart element data of the detected flight chart element(s) into a flight chart database,
wherein the flight chart element data includes at least:
a flight chart element name associated with one of the flight chart element(s) of one of the flight chart(s);
the element type of the one of the flight chart element(s);
an x coordinate of the one of the flight chart element(s); and
a y coordinate of the one of the flight chart element(s).

2. The system for flight chart element searching of claim 1, comprising:
an aircraft display (322) configured to display the flight chart(s) using the one or more set(s) of aircraft display hardware directives; and
an aircraft computing device (314) including one or more processers configured to execute program instructions causing the one or more processors to:
display the one of the flight chart(s) and a graphical user interface, GUI, using the aircraft display,
wherein the GUI includes a menu configured to present the flight chart element name associated with the one of the flight chart element(s),
wherein the flight chart element name is configured to be searchable by a user of an aircraft using a search bar; and
responsive to the user searching for the flight chart element name and selecting the flight chart element name, highlighting the associated one of the flight chart element(s) in the flight chart using the aircraft display.

3. The system for flight chart element searching of claim 2,
wherein the plurality of element types further comprise an obstacle symbol,
wherein one of the flight chart element(s) comprises the obstacle symbol,
wherein the processor(s) of the aircraft computing device are further configured to execute program instructions causing the processor(s) to:
responsive to a geographical location of the aircraft being within a threshold distance to a geographical location corresponding to the obstacle symbol, highlight the obstacle symbol using the aircraft display.

4. The system for flight chart element searching of any preceding claim, wherein the PDF flight chart file(s) are images representing a terminal flight chart, an en-route flight chart, a nautical flight chart, a world aeronautical flight chart, a sectional flight chart, or an airport diagram flight chart.

5. The system for flight chart element searching of any preceding claim, wherein the respective metadata includes at least one of:
a flight chart name, and
a flight chart type.

6. The system for flight chart element searching of claim 5, wherein each of the flight chart(s) is indexed by the flight chart name and the flight chart type included in the respective metadata.

7. A method for flight chart element searching, comprising:
using a host computing device (302),
converting one or more portable document format, PDF, flight chart files to one or more scalable vector graphics, SVG, flight chart files defined in extensible markup language, XML,
wherein each of the SVG flight chart file(s) is associated with respective metadata defined in XML;
detecting one or more flight chart elements in each of the SVG flight chart file(s), wherein each of the flight chart element(s) comprises an element type of a plurality of element types, the plurality of element types comprising at least:
an airway symbol, a runway symbol, or a taxiway symbol;
converting the SVG flight chart file(s) to one or more flight charts defined in one or more sets of aircraft display hardware directives, wherein each of the flight chart(s) is associated with the respective metadata; and
combining the flight chart(s), the respective metadata, and flight chart element data of the detected flight chart element(s) into a flight chart database,
wherein the flight chart element data includes at least:
a flight chart element name associated with one of the flight chart element(s) of one of the flight chart(s);
the element type of the one of the flight chart element(s);
an x coordinate of the one of the flight chart element(s); and
a y coordinate of the one of the flight chart element(s).

8. The method for flight chart element searching of claim 7, comprising:
using an aircraft computing device,
displaying the one of the flight chart(s) and a graphical user interface, GUI, using an aircraft display,
wherein the aircraft display is configured to display the flight chart(s) using the one or more set(s) of aircraft display hardware directives,
wherein the GUI includes a menu configured to present the flight chart element name associated with the one of the flight chart element(s),
wherein the flight chart element name is configured to be searchable by a user of an aircraft using a search bar; and
responsive to the user searching for the flight chart element name and selecting the flight chart element name, highlighting the associated one of the flight chart element(s) in the flight chart using the aircraft display.

9. The method for flight chart element searching of claim 8,
wherein the plurality of element types further comprise an obstacle symbol,
wherein one of the flight chart element(s) comprises the obstacle symbol,
responsive to a geographical location of the aircraft being within a threshold distance to a geographical location corresponding to the obstacle symbol, highlighting the obstacle symbol using the aircraft display.

10. The method for flight chart element searching of claim 7, wherein the PDF flight chart file(s) are images representing a terminal flight chart, an en-route flight chart, a nautical flight chart, a world aeronautical flight chart, a sectional flight chart, or an airport diagram flight chart.

11. The method for flight chart element searching of claim 7, wherein the respective metadata includes at least one of:
a flight chart name, and
a flight chart type.

12. The method for flight chart element searching of claim 11, wherein each of the flight chart(s) is indexed by the flight chart name and the flight chart type included in the respective metadata.
